# EUROPÄISCHE PATENTSCHRIFT

(11) **EP 0 621 671 B1**
(45) Veröffentlichungstag und Bekanntmachung des Hinweises auf die Patenterteilung: **03.12.1997**
(21) Anmeldenummer: 94201108.1
(22) Anmeldetag: 21.04.1994
(51) Int. Cl.: H02G 3/10, H02G 3/14

(54) **Installationsdose mit hohem Schutzgrad**
Junction box with high protection level
Boîtier d'installation à haut degré de protection

(30) Priorität: 21.04.1993 NL 9300677
(43) Veröffentlichungstag der Anmeldung: 26.10.1994
(73) Patentinhaber: B.V. Kunststoffenindustrie Attema, NL-4203 NN Gorinchem (NL)
(72) Erfinder: Romijn, Jan, NL-4205 KJ Gorinchem (NL)
(74) Vertreter: Mertens, Hans Victor

(56) Entgegenhaltungen:
- EP-A- 0 531 555
- WO-A-91/07794

## Beschreibung

Die Erfindung betrifft eine Dose zur Verwendung in einer elektrischen Anlage, die einen Boden und eine senkrechte Seitenwand aufweist, die eine Dosenöffnung begrenzt, die von einem Deckel abschließbar ist, wobei eines der Deckel-und Seitenwanddosenteile entlang dessen Umfang mit einem Paar in sich geschlossenen und sich entlang dem gesamten Rand des einen Dosenteils erstreckenden Flanschen versehen ist, die vorgesehen sind, sich beidseitig entlang dem anderen Dosenteil zum Zwecke des dazwischen Aufnehmens des Randes des anderen Dosenteiles zu erstrecken.

Eine Dose dierser Art ist aus WO-A-9107794 bekannt.

Eine weitere derartige Verbindungsdose in rechteckiger Ausführung und aus thermoplastischem Material gefertigt, ist bekannt. Bei dieser Dose sind die Flansche ein Bestandteil des Deckels, und übergreifen die Flansche den dem Deckel zugewandten Randbereich der Seitenwand. Die bekannte Dose bietet die Möglichkeit, mit Schnellverschlüssen an den Eckstellen des Deckels einen Schutzgrad IP 54 nach Norm IEC 529 zu erreichen.

Wenn versucht wird, den Schutzgrad zu verbessern, stößt man auf das Problem, daß die Installationsdose aus thermoplastischem Material ohne besondere Maßnahmen ungenügend formbeständig ist, besonders zum Zwecke des Verschließens der Dose zwischen dem Deckel und dem dazugehörigen Seitenwandteil in den Bereichen zwischen den Deckelbefestigungspunkten. Die Anordnung zusätzlicher Deckelbefestigungspunkte in den genannten Bereichen als auf der Hand liegende Maßnahme, um das Abschließen der Dose zu verbessern, ist jedoch inakzeptabel, weil dadurch bei der Anordnung des Deckels zu viele Handlungen ausgeführt werden müssen.

Zwar kan die Formbeständigkeit der Verbindungsdose wesentlich dadurch verbessert werden, daß die Dose aus thermohärtbarem Material gefertigt wird, dessen Grundstoff relativ billig ist, aber derartige Installationsdosen müssen mit Hilfe eines Preßverfahrens gefertigt werden, was einige Minuten für jeweils eine Installationsdose beansprucht, und eine Endbearbeitung der Dose erfordert. Darüberhinaus ist eine substantielle Verbesserung des Schutzgrades auch auf diese Weise nicht möglich.

Der Erfindung liegt die Aufgabe zugrunde, diesen Zustand zu verbessern durch das Schaffen einer einfachen Maßnahme, mit der sowohl bezüglich Verbindungsdosen aus thermoplastischem Material, als auch bezüglich Verbindungsdosen aus thermohärtbarem Material, ein hoher Schutzgrad, wie zum Beispiel IP 67 nach obenerwähnter Norm, realisierbar ist.

Die gattungsgemäße Verbindungsdose ist zu diesem Zweck erfindungsgemäß dadurch gekennzeichnet, daß zumindestens eine der einander zugewandten und einander bei geschlossener Dose überlappende Seiten der Flansche und des anderen Dosenteiles mit einer Auflage aus elastischem Material, das flexibler ist als das Material des Flansches oder des anderen Dosenteiles, an dem es angeordnet und bei geschlossener Dose zwischen einem Flansch und dem anderen Dosenteil zusammengepreßt ist, versehen ist. Die Auflage erfährt eine gleichmäßig verteilte, im wesentlichen senkrecht auf die Flansche der Dose gerichtete Kraft, durch die die Installationsdose sehr gut verschlossen werden kann. Die Schließkraft wird somit an der Stelle, an der diese benötigt wird, erzeugt und braucht nicht von einem Deckelbefestigungspunkt aus über den Deckel auf Bereiche zwischen den Deckelbefestigungspunkten übertragen zu werden. Sogar kann durch Verwendung der Auflage und der Flansche auf weitere Deckelbefestigungsmittel verzichtet werden, obwohl im allgemeinen schon eine Sicherung der Deckelbefestigung erforderlich ist.

Die Auflage kann an einer der beiden Flansche des Paares, einer der Seiten der Seitenwand (wenn der Deckel das Dosenteil ist, das mit Flanschen versehen ist) oder des Deckels (wenn die Seitenwand das Dosenteil ist, das mit Flanschen versehen ist), an beiden Flanschen, an beiden Seiten der Seitenwand (wenn der Deckel mit Flanschen versehen ist) oder des Deckels (wenn die Seitenwand mit Flanschen versehen ist), oder gleichzeitig an einer Flansche oder beiden Flanschen und an einer Seite oder beiden Seiten der Seitenwand oder des Deckels angeordnet sein.

In einer bevorzugten Ausführungsform hat die Auflage ein an Dicke zu- und abnehmendes Profil, in Querrichtung der Flansche gesehen. Das Profil zeigt deshalb einen Punkt, auf dem der Abstand zur gegenüberliegenden Fläche minimal ist, wodurch eine zuverlässige Linienabdichtung oder Quasilinienabdichtung zustande gebracht wird.

Ein Profil, das sich in der Praxis als besonders gut erwiesen hat, ist eines, bei dem die Zu- und Abnahme der Dicke der Auflage im wesentlichen linear ist.

In einer bevorzugten Ausführungsform ist einer der Flansche eines Paares breiter als der andere Flansch, wobei die Auflage an dem schmalsten Flansch oder an der dem schmalsten Flansch zugewandten Seite der Seitenwand der Dose angeordnet ist. Bei einem Deckel oder einer Seitenwand mit einem derartigen Paar Flanschen wird durch den breitesten Flansch bei der Anordnung des Deckels zunächst eine Zentrierung des Deckels auf die Dosenseitenwand erzielt, wonach die Auflage an der Stelle des schmalsten Flansches die abdichtende Wirkung ausübt. Auf diese Weise wird Beschädigung der Auflage bei der Anordnung des Deckels auf der Dose weitgehend vorgebeugt.

Wenn zwischen den Flanschen an der Stelle der Verbindung zwischen ihren Fußteilen ein Schlitz in diese Verbindung angeordnet ist, so kann eine Verschiebung des Auflagematerials durch ein zwischen die Flansche des einen Dosenteiles Einlassen des anderen Dosenteiles leicht aufgefangen werden.

Die Auflage eines der Flansche oder beider Flansche oder einer Seite oder beider Seiten der Seitenwand oder des Deckels besteht vorzugsweise aus einem thermoplastischen Gummi, das elastisch ist und im allgemeinen flexibler ist als das Material, aus dem die Verbindungsdosen normalerweise gefertigt werden, und hervorragend haftend an sowohl thermoplastischen als auch thermohärtbaren Materialien angeordnet werden kann. Als Auflagematerial bevorzugt man insbesondere Styrol-Äthylen-Buten-Styrol (SÄBS).

Die Installationsdose ist vorzugsweise aus einem thermoplastischen Material, zum Beispiel einer Mischung aus Polypropylen und Magnesiumsilikat (Talk) gefertigt, mit der die Flansche Flexibilität und Elastizität aufweisen. Hierdurch kann die erfindungsgemäße Verbindungsdose so entworfen werden, daß in dessen geschlossenem Zustand eine ausgezeichnete Druckverteilung auf die Auflage entsteht. Außerdem ist das Herstellungsverfahren einer solchen Dose einfacher als das einer aus thermohärtbarem Material gefertigten Dose. Weiter ist eine Dose aus thermoplastischem Material dank dessen Flexibilität und Elastizität, weniger anfällig für Beschädigungen.

Zur Sicherung des Deckels in Bezug auf den übrigen Teil der Installationsdose, ist das eine Dosenteil vorzugsweise an dessen Umfang mit einer Anzahl elastischen, in der Fläche des einen Dosenteils auszubiegenden Ohren versehen, die bei der Anordnung des Deckels an der Dose vorgesehen sind, sich hinter dazugehörigen, an der Außenseite des anderen Dosenteiles angeordneten Nocken, zu einer Verriegelung des Deckels an der Dose, festzuhaken. Eine derartige Verriegelung kann so ausgeführt werden, daß diese ausschließlich unter Verwendung eines Werkzeuges, zum Beispiel eines Schraubenziehers, rückgängig gemacht werden kann. Selbstverständlich kann eine Sicherung des Decksels an der Dose auch mittels herkömmlicher Schraubverbindungen oder sogenannter Schnellverschlüsse zustande gebracht werden.

In einer bevorzugten Ausführungsform ist das eine Dosenteil durch den Deckel, und das andere Dosenteil durch die Seitenwand gebildet; der Deckel ist in diesem Fall mit den Flanschen versehen.

Die Erfindung wird anhand der Zeichnung erläutert, in der:
- Fig. 1: eine Draufsicht auf einen erfindungsgemäßen Deckel einer Dose zeigt, bei der der Deckel mit Flanschen versehen ist;
- Fig. 2: eine Seitenansicht des Deckels gemäß Fig. 1, teilweise in Querschnitt nach der Linie II-II in Fig. 1 zeigt;
- Fig. 3: einen Querschnitt nach der Linie III-III in verkleinertem Maßstab des Deckels gemäß Fig. 1 zeigt;
- Fig. 4: in vergrößertem Maßstab ein Detail der Fig. 2 zeigt;
- Fig. 5: eine Draufsicht auf eine Installationsdose zeigt, dessen Deckel gemäß Fig. 1 ein Teil ist;
- Fig. 6: einen Teilquerschnitt des Gehaüses gemäß Fig. 5 längs der Linie VI-VI zeigt;
- Fig. 7: eine Seitenansicht der Dose gemäß Fig. 5 und 6, teilweise in Querschnitt nach der Linie VII-VII, ist; und
- Fig. 8: einen Teilquerschnitt einer anderen Ausführungsform der erfindungsgemäßen Dose zeigt, bei der die Seitenwand mit Flanschen versehen ist.

In den unterschiedlichen Figuren beziehen sich gleiche Bezugszeichen auf die gleichen Teile.

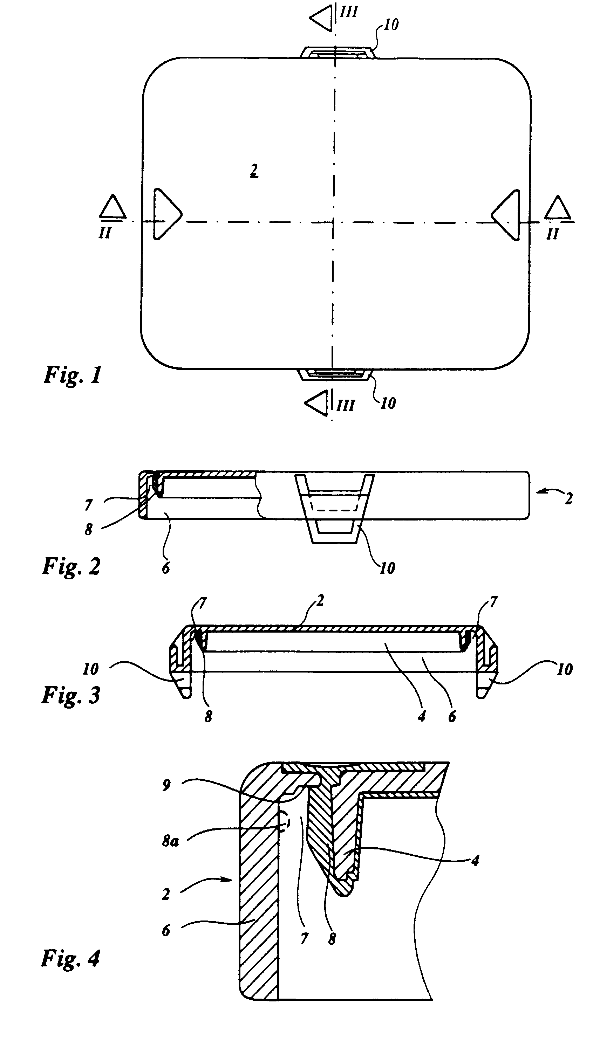

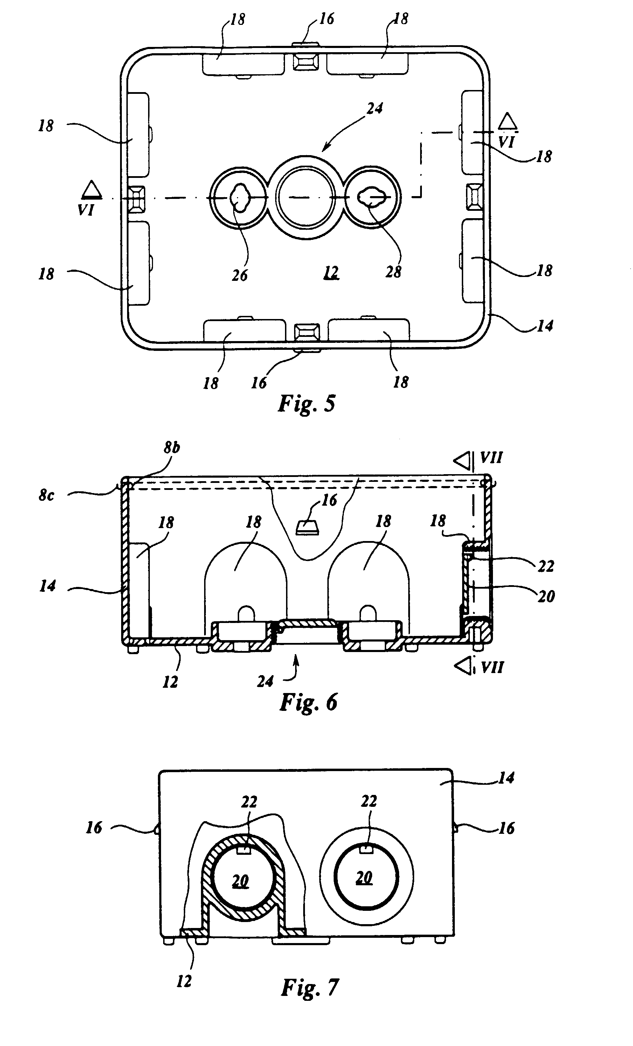

Fig. 1-4 zeigen einen im wesentlichen flachen Deckel 2 für eine Installationsdose, der aus einem flexiblen, elastischem Material, wie einer Mischung aus Polypropylen und Magnesiumsilikat, gefertigt ist. Der Deckel 2 ist entlang dessen Umfang mit zwei parallelen, in sich geschlossenen, sich im wesentlichen senkrecht auf der Fläche des Deckels 2 erstreckenden Flanschen versehen, und zwar einem inneren Flansch 4 und einem breiteren äußeren Flansch 6. Der Flansch 4 ist an der dem Flansch 6 zugewandten Seite mit einer Auflage 8 aus einem elastischen Material, zum Beispiel einem thermoplastischen Gummi, wie Styrol-Äthylen-Buten-Styrol versehen, die flexibler als das Material des Flansches 4 ist. Der Flansch 4 mit der Auflage 8 definiert zusammen mit dem Flansch 6 einen Schlitz 7 zum Zwecke des Aufnehmens eines Randes einer Seitenwand einer Installationsdose, zum Beispiel der in Fig. 5-7 wiedergegebenen Art, die hiernach näher erläutert werden wird.

Nachstehend wird auf die Fig. 1-7 hingewiesen. Der Abstand zwischen den einander zugewandten Seiten von zwei einander gegenüberliegenden Teilen des Flansches 6 stimmt etwa mit dem zwischen den Außenseiten der dazugehörigen Teile der Seitenwand 14 der Installationsdose gemessenen Abstand überein. Der kleinste Abstand zwischen der Auflage 8 und dem Flansch 6, parallel zur Fläche des Deckels 2 gesehen, ist kleiner als die Dicke der Seitenwand 14 der Installationsdose, so daß die Seitenwand 14 durch die elastischen Eigenschaften der Flansche 4 und 6 und der Auflage 8 in dem Schlitz 7 zwischen den Flanschen 4 und 6 festgeklemmt wird. Hiermit wird eine gleichmäßig entlang dem Umfang des Deckels 2 wirksame Verschlußkraft für den Deckel, sowie eine ausgezeichnete Abdichtung der Installationsdose erzielt, wodurch ein hoher Schutzgrad (zur Indiz: IP 67) erreichbar ist. Insbesondere ist aus Fig. 4 zu ersehen, wie die Abmessungen des Querschnitts der Auflage 8, parallel zur Fläche des Deckels 2 gesehen, in Tiefenrichtung des Schlitzes 7 zwischen den Flanschen 4 und 6 zuerst zu einem Höchstwert zunimmt und anschließend wieder einigermaßer geringer wird. Hiermit wird eine Quasilinienangriff der Auflage an der Innenseite der Seitenwand 14 der Installationsdose erzielt. Auf dem Boden des Schlitzes 7 zwischen den Flanschen 4 und 6 ist an der Seite der Auflage 8 ein vertiefter Schlitzteil 9 zum Zwecke des Aufnehmens von durch Anordnung in den Schlitz 7 der Seitenwand 14 der Installationsdose weggeschobenem Material der Auflage 8 vorgesehen.
Wie in Fig. 4 mit einer gestrichelten Linie angedeutet ist, kann eine Auflage 8a auch an der Innenseite des Flansches 6 angeordnet sein, wobei eine Auflage, wie 8 an Flansch 4 ja oder nein vorgesehen sein kann. Daneben gehört es zu den Möglichkeiten, eine Auflage 8b und/oder 8c an der Innenbzw. Außenseite der Seitenwand 14 der Dose anzuordnen, wie in Fig. 6 mit gestrichelten Linien angedeutet ist, statt oder zusätzlich zur Auflage 8 oder 8a.

Der Deckel 2 ist an zwei gegenüberliegenden Seiten mit Ohren 10 versehen, die mit an der Außenseite der Seitenwand der Installationsdose angeordneten Nocken 16 zur einrastenden Verriegelung des Deckels 2 an der Installationsdose zusammenarbeiten können.

Der in Fig. 5-7 gezeigte Teil der Installationsdose besteht aus einem im wesentlichen rechteckigen Kasten mit einem Boden 12 und obengenannter senkrechten Seitenwand 14. Auf herkömmliche Weise ist die Seitenwand 14 mit in Richtung der Innenseite der Dose hervorstehenden, von einem Innengewinde versehenen Tüllen 18, versehen, die an dem der Innenseite der Installationsdose zugewandten Ende mittels einer Brechwand 20 abgeschlossen sind. An jeder Brechwand ist an der der Außenseite der Installationsdose zugewandten Seite ein Nocken 22 angeordnet, mit dem vorgesehen wird, daß beim Einschrauben einer Überwurfmutter in eine Tülle 18, die Verbindung zwischen der Brechwand 20 und der Tülle 18 losreißt und die Brechwand 20 deshalb gleichzeitig mit dem Einschrauben der Überwurfmutter ohne zusätzliche Handlungen entfernt wird. Im Boden 12 der Installationsdose ist ebenfalls eine Brechwandeinrichtung 24 in der gleichen Art als die der Seitenwand 18 angeordnet. Schließlich sind in dem Boden 12 der Installationsdose zwei Löcher 26 und 28 zu einer Befestigung der Dose an einer Wand oder dergleichen angeordnet.

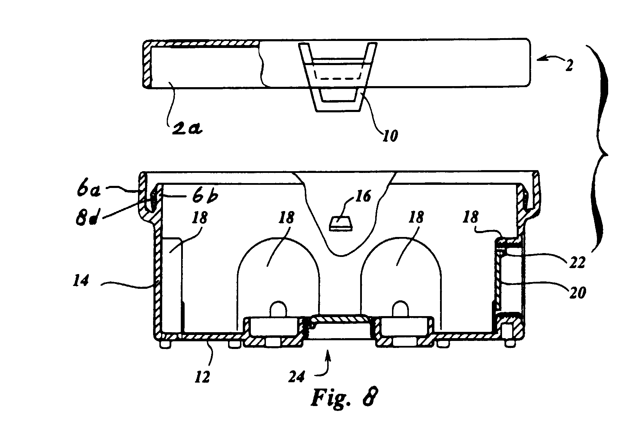

Es wird deutlich sein, daß die Flansche nicht nur an dem Deckel 2 angeordnet sein können, wobei die Seitenwand der Dose zwischen den Flanschen eingeklemmt ist, sondern, daß die Flansche auch an der Seitenwand 14 angeordnet sein können, wobei der Deckel 2 zwischen den Flanschen eingeklemmt ist, wie Fig. 8 erläutert. Der Abstand zwischen den einander zugewandten Seiten von zwei einander gegenüberliegenden Teilen eines Flanches 6a stimmt etwa mit dem zwischen den Außenseiten der dazugehörigen Teile des Randes 2a des Deckels 2 der Installationsdose gemessenen Abstand überein. Der kleinste Abstand zwischen einer Auflage 8d auf einem Flansch 6b und dem Flansch 6a, parallel zur Fläche des Deckels 2 gesehen, ist kleiner als die Dicke des Randes 2a des Deckels 2, so daß der Deckel 2 durch die elastischen Eigenschaften der Flansche 6a und 6b und der Auflage 8d zwischen den Flanchen 6a und 6b festgeklemmt wird. Dadurch wird ein hoher Schutzgrad erreicht.

## Patentansprüche

1. Dose zur Verwendung in einer elektrischen Anlage, die einen Boden (12) und eine senkrechte Seitenwand (14) aufweist, die eine Dosenöffnung begrenzt, die von einem Deckel (2) abschließbar ist, wobei eines der Deckel- und Seitenwanddosenteile entlang dessen Umfang mit einem Paar in sich geschlossenen und sich entlang dem gesamten Rand des einen Dosenteiles erstreckenden Flanschen (4,6;6a,6b) versehen ist, die vorgesehen sind, sich beidseitig entlang dem anderen Dosenteil zum Zwecke des dazwischen Aufnehmens des Randes des anderen Dosenteiles zu erstrecken, dadurch gekennzeichnet, daß zumindestens eine der einander zugewandten und einander bei geschlossener Dose überlappende Seiten der Flansche (4,6;6a,6b) und des anderen Dosenteiles mit einer Auflage (8;8a;8b,8c;8d) aus elastischem Material, das flexibler ist als das Material des Flansches oder des anderen Dosenteiles, an dem es angeordnet und bei geschlossener Dose zwischen einem Flansch und dem anderen Dosenteil zusammengepreßt ist, versehen ist.

2. Installationsdose nach Anspruch 1, dadurch gekennzeichnet, daß die Auflage (8;8a;8b,8c;8d) ein an Dicke zu- und abnehmendes Profil hat, in Querrichtung der Flansche (4,6;6a,6b) gesehen.

3. Installationsdose nach Anspruch 2, dadurch gekennzeichnet, daß die Zu- und Abnahme der Dicke der Auflage (8;8d) im wesentlichen linear ist.

4. Installationsdose nach Ansprüchen 1, 2 oder 3, dadurch gekennzeichnet, daß einer der Flansche (6;6a) des Paares breiter als der andere Flansch (4;6b) ist, wobei die Auflage (8;8d) an dem schmalsten Flansch oder an der dem schmalsten Flansch zugewandten Seite des anderen Dosenteiles angeordnet ist.

5. Installationsdose nach einem der Ansprüche 1-4, dadurch gekennzeichnet, daß zwischen den Flanschen (4,6;6a,6b) an der Stelle der Verbindung zwischen ihren Fußteilen ein Schlitz (9) in diese Verbindung angeordnet ist.

6. Installationsdose nach einem der Ansprüche 1-5, dadurch gekennzeichnet, daß die Auflage (8;8a;8b,8c;8d) aus einem thermoplastischem Gummi besteht.

7. Installationsdose nach Anspruch 6, dadurch gekennzeichnet, daß die Auflage (8;8a;8b,8c;8d) aus Styrol-Äthylen-Buten-Styrol besteht.

8. Installationsdose nach einem der Ansprüche 1-7, dadurch gekennzeichnet, daß die Dose aus einem thermoplastischem Material gefertigt ist.

9. Installationsdose nach Anspruch 8, dadurch gekennzeichnet, daß die Dose aus einer Mischung aus Polypropylen und Magnesiumsilikat gefertigt ist.

10. Installationsdose nach einem der Ansprüche 1-9, dadurch gekennzeichnet, daß das eine Dosenteil an dessen Umfang mit einer Anzahl elastischen, in der Fläche des einen Dosenteiles auszubiegenden Ohren (10) versehen ist, die bei der Anordnung des Deckels (2) an der Dose vorgesehen sind, sich hinter dazugehörigen, an der Außenseite des anderen Dosenteiles angeordneten Nocken (16), zu einer Verriegelung des Deckels (2) an der Dose, festzuhaken.

11. Installationsdose nach einem der Ansprüche 1-10, dadurch gekennzeichnet, daß das eine Dosenteil durch den Deckel (2), und das andere Dosenteil durch die Seitenwand (14) gebildet ist.

## Claims

1. A box for use in an electrical installation, which has a bottom (12) and a perpendicular side wall (14) defining a box opening which can be closed off by a cover (2), one of the cover and side wall box portions being provided along its periphery with a pair of flanges (4, 6; 6a, 6b) which are closed in themselves and which extend along the entire edge of the one box portion and which are provided to extend on both sides along the other box portion for the purposes of receiving therebetween the edge of the other box portion, characterised in that at least one of the mutually facing sides, which are in overlapping relationship when the box is closed, of the flanges (4, 6; 6a, 6b) and the other box portion is provided with a covering (8; 8a; 8b, 8c; 8d) of elastic material which is more flexible than the material of the flange or the other box portion, on which it is arranged and when the box is closed compressed between a flange and the other box portion.

2. An installation box according to claim 1, characterised in that the covering (8; 8a; 8b, 8c; 8d) is of a profile which increases and decreases in thickness, as viewed in the transverse direction of the flanges (4, 6; 6a, 6b).

3. An installation box according to claim 2, characterised in that the increase and decrease in the thickness of the covering (8; 8d) is substantially linear.

4. An installation box according to claim 1, 2 or 3, characterised in that one of the flanges (6; 6a) of the pair is wider than the other flange (4; 6b), the covering (8; 8d) being arranged at the narrowest flange or at the side of the other box portion, which faces the narrowest flange.

5. An installation box according to any of claims 1 to 4, characterised in that between the flanges (4, 6; 6a, 6b) at the location of the connection between the base portions thereof a slot (9) is provided in said connection.

6. An installation box according to any of claims 1 to 5, characterised in that the covering (8; 8a; 8b, 8c; 8d) consists of a thermoplastic rubber.

7. An installation box according to claim 6, characterised in that the covering (8; 8a; 8b, 8c; 8d) comprises styrene-ethylene-butene-styrene.

8. An installation box according to any of claims 1 to 7, characterised in that the box is made from a thermoplastic material.

9. An installation box according to claim 8, characterised in that the box is made from a mixture of polypropylene and magnesium silicate.

10. An installation box according to any of claims 1 to 9, characterised in that the one box portion is provided at the periphery thereof with a number of elastic ears (10) which are to be bent out in the surface of the one box portion and which are adapted when the cover (2) is arranged on the box to hook fast behind associated projections (16) arranged on the outside of the other box portion, for locking the cover (2) to the box.

11. An installation box according to any of claims 1 to 10, characterised in that the one box portion is formed by the cover (2) and the other box portion is formed by the side wall (14).

## Revendications

1. Boîtier destiné à être utilisé dans une installation électrique, qui comporte un fond (12) et une paroi latérale normale (14) qui délimite l'ouverture du boîtier qui peut être fermée par un couvercle (2), une des parties du boîtier, couvercle ou paroi latérale, le long du pourtour, étant pourvue d'une paire de brides (4, 6; 6a, 6b) qui se referment le long du pourtour et qui existent tout le long du bord de ladite partie, ces brides étant prévues, le long de l'autre partie, pour se placer des deux côtés et recevoir entre elles le bord de l'autre partie, caractérisé en ce qu'au moins un des côtés, tournés l'un vers l'autre et se chevauchant lorsque le boîtier est fermé, des brides (4, 6; 6a, 6b) et de l'autre partie du boîtier, comporte un revêtement (8; 8a; 8b; 8c; 8d) en matière élastique qui est plus souple que la matière de la bride ou de l'autre partie du boîtier, sur laquelle il est placé et est pressé ensemble dans le boîtier fermé entre une bride et l'autre partie du boîtier.

2. Boîtier d'installation suivant la revendication 1, caractérisé en ce que le revêtement (8; 8a; 8b; 8c; 8d) a un profil qui augmente et diminue en épaisseur, vu dans le sens transversal de la bride (4, 6; 6a, 6b).

3. Boîtier d'installation suivant la revendication 2, caractérisé en ce que l'augmentation et la réduction de l'épaisseur du revêtement (8; 8d) sont essentiellement linéaires.

4. Boîtier d'installation suivant les revendications 1, 2 ou 3, caractérisé en ce que une des brides (6; 6a) de la paire est plus large que l'autre bride (4; 6b), le revêtement (8; 8d) étant placé sur la bride la plus étroite ou sur le côté de l'autre partie du boîtier, tourné vers la bride la plus étroite.

5. Boîtier d'installation suivant une des revendications 1 à 4, caractérisé en ce qu'entre les brides (4, 6; 6a, 6b), à l'endroit de la liaison entre leurs parties pieds, il y a une fente (9) dans cette liaison.

6. Boîtier d'installation suivant une des revendications 1 à 5, caractérisé en ce que le revêtement (8; 8a; 8b; 8c; 8d) est constitué d'une gomme thermoplastique.

7. Boîtier d'installation suivant la revendication 6, caractérisé en ce que le revêtement (8; 8a; 8b; 8c; 8d) est constitué de styrène-éthylène-butène-styrène.

8. Boîtier d'installation suivant une des revendications 1 à 7, caractérisé en ce que le boîtier est fabriqué en matière thermoplastique.

9. Boîtier d'installation suivant la revendication 8, caractérisé en ce que le boîtier est fabriqué en mélange de polypropylène et de silicate de magnésium.

10. Boîtier d'installation suivant une des revendications 1 à 9, caractérisé en ce que la première partie du boîtier est, sur son pourtour, pourvue d'une pluralité d'oeillets élastiques (10), se pliant en dehors dans la surface de la première partie du boîtier, qui sont prévus dans le placement du couvercle (2) sur le boîtier, pour s'accrocher solidement derrière des mentonnets (16) qui sont placés sur le côté externe de l'autre partie du boîtier pour un verrouillage du couvercle (2) au boîtier.

11. Boîtier d'installation suivant une des revendications 1 à 10, caractérisé en ce que la première partie du boîtier est formée par le couvercle (2) et l'autre partie du boîtier par la paroi latérale (14).
